**Europäisches Patentamt**

**European Patent Office**

**Office européen des brevets**

(11) Numéro de publication : **0 475 833 A1**

# DEMANDE DE BREVET EUROPEEN

(21) Numéro de dépôt : **91402403.9**

(51) Int. Cl.⁵ : **F16K 47/10, F16K 15/04**

(22) Date de dépôt : **10.09.91**

(30) Priorité : **14.09.90 FR 9011412**

(43) Date de publication de la demande :
**18.03.92 Bulletin 92/12**

(84) Etats contractants désignés :
**DE GB IT SE**

(71) Demandeur : **TELEMECANIQUE**
**43-45, Boulevard Franklin Roosevelt**
**F-92500 Rueil Malmaison (FR)**

(72) Inventeur : **Guillin, Daniel**
**10 rue de la Vieille Pépinière**
**F-95560 Montsoult (FR)**
Inventeur : **Nicolas, Michel**
**1 rue des Dentellières, St Germain de la**
**Grange**
**F-78640 Neauple le Chateau (FR)**

(74) Mandataire : **Robert, Jean-Pierre et al**
**CABINET BOETTCHER 23, rue la Boétie**
**F-75008 Paris (FR)**

(54) **Limiteur de débit unidirectionnel.**

(57)    Le limiteur unidirictionnel comporte un corps (12) dont chacune des extrémités est équipée d'un raccord (16,18), un organe d'obturation (76) monté mobile entre un siège (74) et un élément de butée (78), et une bague d'étranglement (22) montée tournante sur le corps du clapet pour modifier la section d'un passage d'étranglement (84,86) formé dans le corps et qui contourne le siège de clapet.

Conformément à l'invention, le siège (74) est formé à l'extrémité d'une douille interne (40) en matière plastique qui est encliquetée par introduction axiale dans l'alésage interne (38) du corps (12).

EP 0 475 833 A1

Jouve, 18, rue Saint-Denis, 75001 PARIS

La présente invention concerne un limiteur de débit unidirectionnel, notamment pour fluide pneumatique.

L'invention concerne plus particulièrement un limiteur de débit unidirectionel du type de celui décrit et représenté dans le document DE-A-3 215 696 et qui comporte un corps tubulaire dont chacune des deux extrémités axiales opposées est équipée de moyens de raccordement à une canalisation de fluide, comportant un canal axial traversant un siège de clapet et dans lequel est logée une bille d'obturation de ce canal, mobile entre le siège et un élément de butée axialement distant du siège. En dérivation de ce premier canal aux bornes du clapet, un second canal est défini par deux orifices radiaux ménagés dans la paroi du corps de chaque côté du siège et par un conduit annulaire les reliant à l'extérieur du corps ménagé entre ce dernier et un manchon externe. Une bague particulière, montée tournante sur le corps, permet de découvrir plus ou moins le débouché de l'un des orifices radiaux dans le conduit annulaire et donc par rotation d'ajuster la section de passage de cette dérivation, donc le débit pouvant la traverser.

La bague d'étranglement est avantageusement réalisée en matériau élastique et est montée avec un léger serrage radial sur la portion de surface cylindrique qui la reçoit.

Il est apparu souhaitable de perfectionner certains aspects d'un limiteur de débit de ce type afin d'en améliorer les performances et d'en réduire les coûts de fabrication.

En effet, dans le limiteur selon ce document, le corps est une pièce métallique massive, dans l'alésage interne de laquelle est usiné directement le siège de clapet. Ces opérations de décolletage sont généralement coûteuses. En outre, l'élément de butée axiale de la bille d'obturation est une pièce rapportée réalisée soit sous la forme d'une goupille transversale emmanchée dans un perçage de la paroi du corps tubulaire, soit sous la forme d'un doigt axial s'étendant depuis la face d'extrémité d'un fourreau qui est emmanché à force dans l'alésage interne du corps.

Outre le coût de toutes ces opérations d'usinage et de montage, la mise en place de l'élément de retenue engendre des contraintes dans le corps pouvant conduire notamment au niveau de la surface de portée pour la bague d'étranglement, à des déformations, si bien que le contact de cette bague serait mal assuré, et l'étanchéité à cet endroit approximative, ce qui nuirait au bon fonctionnement du limiteur de débit, si le corps n'était pas métallique. Or, réaliser un tel dispositif entièrement en matière plastique est un facteur très important de diminution des coûts, mais dans ce cas la structure connue ne convient pas. Afin donc de résoudre ce problème, la présente invention concerne un limiteur de débit unidirectionnel dans lequel le siège de la bille d'obturation est porté par l'extrémité d'une douille interne encliquetée dans une portion de l'alésage interne du corps dans laquelle elle est introduite axialement.

Cet encliquetage établit une liaison axiale entre douille porte siège et corps du limiteur sans établissement d'une contrainte radiale entre les deux qui supprime donc toute déformation intempestive de la portée de glissement de la bague d'étranglement, ce qui permet de réaliser le corps du limiteur en matière plastique.

Cette séparation en deux éléments de l'ensemble siège de clapet / corps du limiteur possédant les moyens de raccordement, permet de simplifier la fabrication du limiteur. Elle autorise également l'intégration de cette fonction limiteur de débit unidirectionnel dans des organes de raccordement connus sous le nom "raccords Banjo" dans lesquels la restriction de section est disposée sur le trajet du fluide en provenance de la vis d'implantation du raccord sur un appareil pneumatique (distributeur ou vérin). Enfin, à dimensions nominales égales, la pièce portant le siège est identique pour toutes les formes de corps qu'il est nécessaire de produire (corps droit, corps banjo, raccords en T...), et les divers types d'éléments de raccordement.

De manière préférée, cette douille interne est également en matière plastique, et comporte deux collerettes radiales d'extrémité coopérant avec deux épaulements internes radiaux du corps encadrant un débouché de la dérivation dans l'alésage, l'une des collerettes étant extérieurement chanfreinée pour faciliter son introduction axiale dans le corps du limiteur, la douille comportant en outre un orifice au droit de ce débouché.

Un joint torique d'étanchéité est agencé entre les surfaces cylindriques en regard de la douille interne et de la portion d'alésage interne, situées entre le clapet et le débouché du canal de dérivation.

Selon une autre caractéristique de l'invention, le corps du limiteur est conformé en corps de raccord "banjo", le siège du clapet étant tourné vers l'extrémité du raccord traversée par la vis d'implantation.

D'autres caractéristiques et avantages de l'invention apparaîtront à la lecture de la description détaillée qui va suivre, donnée à titre d'exemple non limitatif et pour la compréhension de laquelle on se reportera au dessin annexé dont la figure unique est une vue en coupe axiale d'un mode de réalisation préféré d'un limiteur unidirectionnel de débit conforme aux enseignements de la présente invention.

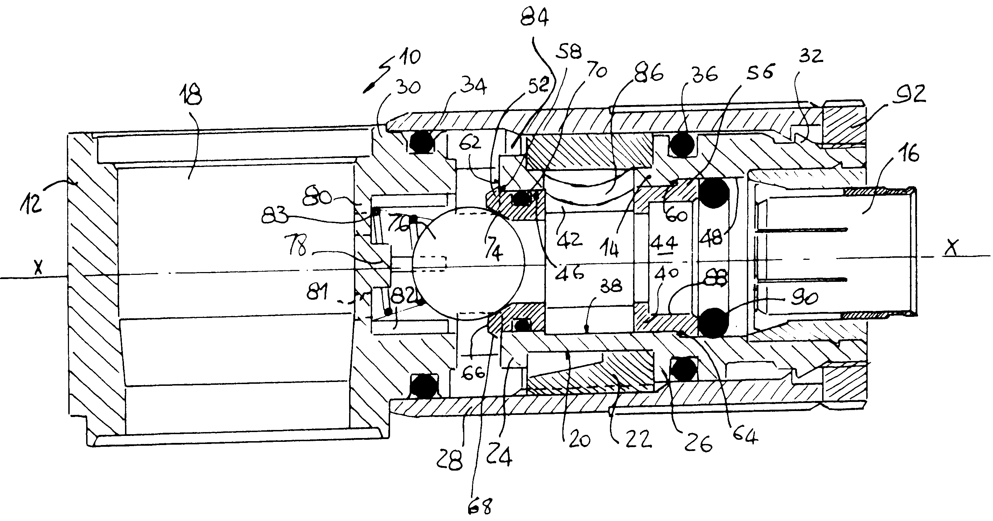

La figure illustre un limiteur de débit unidirectionnel dont les moyens fonctionnels sont du type de ceux décrits dans le document DE-A-3 215 696 et plus particulièrement du type illustré à la figure 4 de ce document.

Pour l'ensemble des caractéristiques communes au clapet selon l'invention et à celui qui fait l'objet du document DE-A-3 215 696 et quine seraient pas décrites en détail dans la description qui va suivre, on pourra avantageusement se reporter au contenu de ce document antérieur publié.

Le limiteur 10 comporte un corps 12 d'axe général X-X et dont la forme générale est celle d'un manchon cylindrique. Ce corps est en matière plastique injectée.

Le corps 12 comprend une partie centrale 14 et deux éléments de raccordement 16 et 18 agencés à chacune des extrémités axiales opposées du corps. Les éléments de raccordement 16 forment un raccord rapide à griffes, connu en lui-même, tandis que l'élément 18 est un alésage transversal, perpendiculaire à l'axe X - X du corps 12 tubulaire, destiné à recevoir une vis creuse de fixation et de raccordement du limiteur à un appareil (vérin par exemples). L'élément 16 peut être constitué différemment, par exemple sous forme de taraudage. L'élément 18 peut recevoir une vis ayant, en sus de sa fonction de fixation, une fonction proprement pneumatique, par exemple de blocage ou de sectionnement.

D'une manière connue, la portion de surface cylindrique externe 20 de la partie centrale 14 du corps 12 reçoit à rotation une bague d'étranglement 22 qui est immobilisée axialement entre deux épaulements radiaux externes 24 et 26 du corps 12.

La bague d'étranglement est solidaire en rotation d'un manchon externe de commande 28 qui est immobilisé axialement entre deux épaulements radiaux 30 et 32 externes du corps.

Deux joints toriques 34 et 35 reçus dans des gorges du corps 12 assurent l'étanchéité entre ce dernier et le manchon de commande 28.

Dans la partie centrale 14, l'alésage interne 38 du corps 12 reçoit une douille interne 40 réalisée en matière plastique et comportant un orifice latéral 42 dans sa portion centrale.

La douille 40 comporte un canal interne 44 qui permet le passage du fluide et sa surface cylindrique externe 46 est reçue librement dans l'alésage interne 38 du corps 12.

La douille 40 est mise en place dans l'alésage 38 par encliquetage dans le corps 12.

A cet effet la portion centrale 38 de l'alésage interne est prolongée axialement en direction de l'extrémité axiale, de droite en considérant la figure, du corps par un alésage d'introduction 48 capable d'accueillir et de guider deux épaulements radiaux externes 52 et 56 de la douille formés aux extrémités axiales opposées de cette dernière.

Les faces radiales en vis-à-vis 58 et 60 des épaulements 52 et 56 coopèrent avec deux surfaces radiales correspondantes 62 et 64 du corps 12.

Afin de faciliter l'introduction axiale de la douille 40 dans l'alésage interne 38, la face d'extrémité axiale 66 de l'épaulement radial 52 comporte un chanfrein d'introduction 68.

L'étanchéité entre les surfaces cylindriques 38 et 46 est assurée par un joint torique 70.

La face d'extrémité 66 de la douille comporte un siège de clapet conique 74 avec lequel coopère une bille d'obturation 76, qui sera non métallique (par exemple en polyuréthane).

La bille 76 est montée mobile axialement dans l'alésage interne du corps 12 entre le siège 74 et l'extrémité d'un doigt axial de butée 78 en saillie d'une paroi 80 mitoyenne entre l'alésage 38 et l'alésage 18.

Les déplacements de la bille 76 entre le siège 74 et la butée 78 sont guidés par des cannelures axiales 82 réparties autour de l'axe X-X. L'alésage interne 38 du corps communique avec l'alésage 18 par des orifices 81 ménagés dans la paroi mitoyenne 80. On peut d'autre part prévoir entre le corps 12 et la bille 76 un ressort 83 afin de prépositionner la bille sur son siège 74 et d'obtenir un effet antiretour en fonction du tarage du ressort.

D'une manière connue, notamment par le document rappelé en préambule, le corps du limiteur définit avec le manchon externe 28 un canal de dérivation 84 aux bornes du siège 74 pour le contourner. Ce canal 84 comporte une section de passage réglable par la bague 22 dont la position angulaire définit le taux de recouvrement de l'orifice 86 ménagé dans le corps 12, qui appartient au canal 84.

On notera par ailleurs que la douille 40 comporte, à son extrémité opposée au siège 74, un logement 88 dans lequel on peut loger l'extrémité d'un tube non représenté qui sera attelé au limiteur par les moyens 16 de raccordement. La fonction de ce logement est un support centré de cette extrémité du tube de sorte qu'un joint torique 90 peut efficacement assurer l'étanchéité de la connexion.

Hormis les pièces des moyens de raccordement 16 qui sont métalliques, toutes les pièces du limiteur sont en matière plastique. Il est donc aisé de procéder au montage du dispositif par encliquetage de la douille 40 sur le corps 12 et du manchon 28 sur ce même corps. L'insertion des pièces métalliques est réalisée de manière connue par cramponnage. On notera enfin la présence d'un écrou 92 permettant de bloquer la position angulaire choisie du manchon.

**Revendications**

1. Limiteur unidirectionnel de débit (10), notamment pour fluide pneumatique, du type comportant un corps tubulaire (12) dont les extrémités comportent des moyens de raccordement (16,18) à une installation et à un appareil de l'installation, ce corps tubulaire étant traversé par un canal axial (81,44) reliant ces moyens de raccordement (16, 18) et traversant un siège (74) de clapet tourné en direction de l'alésage (18) dans lequel une bille d'obturation (76) est logée entre le siège (74) et un élément de butée (78) axialement distant du siège, et comportant un canal de dérivation (84, 86) raccordé au canal axial de part et d'autre du siège (74) de clapet, une bague (22) d'étranglement étant montée tournante sur une partie externe (20) du corps pour modifier la section du canal de dérivation (84, 86) caractérisé en ce que les moyens de raccordement à l'appareil comportant un alésage (18) perpendiculaire au canal axial pour le passage d'une vis de fixation du corps tubulaire à l'appareil, le siège (74) de la bille (76) est porté par une douille interne (40) encliquetée dans une portion (38) d'un alésage interne du corps (12) qui constitue une partie du canal axial et dans laquelle elle est introduite axialement.

2. Limiteur selon la revendication 1 caractérisé en ce que l'élément de butée (78) est porté par une paroi mitoyenne (80) entre l'alésage (18) et l'alésage interne du corps tubulaire (12).

3. Limiteur selon la revendication 2 caractérisé en ce que le canal axial traverse la paroi mitoyenne (80) par des orifices (81).

4. Limiteur selon l'une des revendications précédentes, caractérisé en ce que le corps (12) et la douille (40) sont en matière plastique.

5. Limiteur selon la revendication 1, caractérisé en ce que la douille interne (40) est immobilisée axialement dans la portion d'alésage interne (38) du corps (12) par deux épaulements radiaux externes (52, 56) dont les surfaces radiales en vis-à-vis (58, 60) coopèrent avec deux surfaces radiales (62, 64), correspondantes formées dans l'alésage interne.

6. Limiteur selon la revendication 5, caractérisé en ce que l'un (52) des épaulements radiaux comporte un chanfrein (68) d'introduction de la douille dans la portion (38) d'alésage interne.

7. Limiteur selon la revendication 6, caractérisé en ce que le siège de clapet (74) et ledit épaulement radial (52) sont formés à la même extrémité axiale de la douille interne (40).

8. Limiteur selon l'une quelconque des revendications précédentes, caractérisé en ce qu'il comporte des moyens d'étanchéité (70) agencés entre les surfaces cylindriques (38, 46) en regard de la douille interne et de la portion d'alésage interne entre les raccordements du canal de dérivation au canal axial.

9. Limiteur selon la revendication 7, caractérisé en ce que le siège (74) du clapet est porté par l'extrémité de la douille (40) voisine de l'alésage (18).

Office européen

des brevets

**RAPPORT DE RECHERCHE EUROPEENNE**

Numero de la demande

EP   91 40 2403

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 597 954  (TELEMECANIQUE)<br>* Page 6, lignes 15-20; figures 1-15 *<br>--- | 1-7,9 | F 16 K   47/10<br>F 16 K   15/04 |
| Y | FR-A-2 307 205  (PINGEOT-BARDIN)<br>* Le document entier *<br>--- | 1-7,9 | |
| Y | DE-A-3 215 696  (HELMUT)<br>* Le document entier *<br>--- | 1-7,9 | |
| A | US-A-4 071 045  (BRANDT)<br>* Colonne 4, lignes 13-41; figures 2,7 *<br><br>--- | 1,4-8 | |
| A | FR-A-2 343 281  (BOUTEILLE)<br>* Revendication 1; figures 1-8 *<br>--- | 1 | |
| A | US-A-4 100 935  (RANCK)<br>--- | | |
| A | GB-A-  972 053  (POWER)<br>--- | | |
| A | FR-A-2 473 671  (ASAHI)<br>----- | | |

**DOMAINES TECHNIQUES RECHERCHES (Int. Cl.5)**

F 16 K
F 15 B

Le présent rapport a été établi pour toutes les revendications

| Lieu de la recherche | Date d'achèvement de la recherche | Examinateur |
|---|---|---|
| LA HAYE | 25-10-1991 | FONSECA Y FERNANDEZ H. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

&  : membre de la même famille, document correspondant

EPO FORM 1503 03.82 (P0402)